# EUROPEAN PATENT APPLICATION

(11) **EP 1 126 379 A1**
(43) Date of publication of application: **22.08.2001**
(21) Application number: 00116614.9
(22) Date of filing: 01.08.2000
(51) Int. Cl.: G06F 17/21

(54) **Conversion of directly assigned document format attributes**

(30) Priority: 16.02.2000 EP 00103172
(71) Applicant: SUN MICROSYSTEMS, INC., Palo Alto, California 94303 (US)
(72) Inventor: Breuer, Matthias, 21220 Seevetal (DE); Lippka, Christian, 25358 Hohenfelde (DE)
(74) Representative: Betten & Resch

(57) **Abstract**

A method of formatting a computer readable document comprising a plurality of objects having directly assigned attributes comprises the steps of detecting the objects having directly assigned attributes, creating a style element for every detected combination of attributes in the document, and replacing the directly assigned attributes by a reference to the corresponding style element. A change of a particular attribute throughout the entire document can thus be carried out simply by changing the style elements in which this attribute appears.

## Description

### FIELD OF THE INVENTION

The present invention relates to a method of formatting a computer readable document comprising a plurality of objects having directly assigned attributes.

### DESCIPTION OF THE RELATED ART

Computer readable documents like text documents, graphics documents, presentations etc. contain a plurality of formatted objects like characters, formulae, paragraphs etc. In general there are two ways of creating such formatted objects. In one way styles or templates are used describing one or more attributes (e.g. bold, font color, font size, underline etc.) of the objects to which the respective style is applied. The formatting style or template then defines the formatting properties of the whole text portion. The other way of creating a formatted object is to assign the attributes of this object directly using e.g. function keys or other input devices like a mouse. The format is then directly defined for a selected document portion like e.g. a character, a text paragraph, a table, mathematical formula etc. by the user choosing the desired attribute for the respective object.

In many cases it is necessary to change certain attributes or style properties of a document like a text document during editing of the document. It may for example be the case that a particular attribute like a color is not available on a specific output device like a printer or is found to be less appealing than expected. If the user has generated the text only using the styles or templates such later amendments can be carried out rather easy by changing the attributes of the respective styles. In many cases, however, the user prefers to frequently use direct formatting when producing the text document. This may be faster or more convenient for the user. If, however, direct attributes in a large text document have to be changed, these changes must all be carried out "manually", selecting every object having the attribute and changing the same. This process is akward and time-consuming since the user wishing to change the attributes in a document has to go through the complete document and change all appearances of these attributes.

In prior art consumer application software such styles or templates are for example stored in a separate subdirectory of the document. This subdirectory contains the name of the style, parent and child (or follow) styles and separate sections for defining paragraph attributes and character attributes.

Directly assigned attributes are for example stored in a particular subdirectory in blocks of 512 bytes. In the document text references to the directory containing the attributes definitions and positional information about attribute changes are then included. Alternatively, the whole information about directly assigned attributes may be included in a data block appended to a document portion like a text paragraph, in which the object with the directly assigned format appears.

It would therefore be desirable to have a method of formatting a computer readable document comprising a plurality of objects having directly assigned attributes, wherein a later change of these directly assigned attributes can be carried out more easily.

### SUMMARY OF THE INVENTION

The present invention provides a method of formatting a computer readable document comprising a plurality of objects with directly assigned attributes including the steps of detecting the objects having directly assigned attributes, creating a style element for every detected combination of attributes in the document, and replacing the directly assigned attributes by a reference to the corresponding style element.

The formatting method according to the present invention allows the user to change the attributes of objects he or she has directly assigned as easy as object attributes defined by a style. Editing such a document is therefore greatly enhanced and facilitated.

The formatting method according to the invention may be preferably carried out while the document is stored in a random access memory of the processing unit of a computer system, that is during the time the document is opened. It is therefore not necessary to close or save a document before changing a style attribute.

Preferably the created elements are reconvertible into the corresponding directly assigned attributes.

According to a preferred embodiment of the present invention, the style elements are assigned names from which the user can recognize the styles contained in the style element.

A further implementation of the present invention provides a computer system for formatting a computer readable document comprising a plurality of objects having directly assigned attributes, which computer system comprises a memory for storing the document data and a processing unit for carrying out the steps of detecting the objects having directly assigned attributes, creating a style element for every detected combination of attributes in the document, and replacing the directly assigned attributes by a reference to the corresponding style element.

A still further implementation of the present invention provides a computer program for formatting a computer readable document comprising a plurality of portions having directly assigned attributes, the computer program comprising program code for carrying out the steps of detecting the portions having directly assigned attributes, creating a style element for every detected combination of attributes in the document, and replacing the directly assigned attributes by a reference to the corresponding style element.

A program code may be embodied in any form of a computer program product. A computer program product comprises a medium which stores or transports computer readable code, or in which computer readable code can be embedded. Some examples of computer program products are CD ROM discs, ROM cards, floppy discs, magnetic tapes, computer hard drivers, servers on a network and signals transmitted over a network representing a computer readable program code.

According to the present invention all attributes of the respective document are defined by style elements so that a particular attribute can be changed in the entire document by only changing the style elements in which this particular attribute is contained. A manual review of the document in respect to the appearance of this particular style attribute is therefore no longer necessary. The editing of the document is therefore greatly facilitated.

The above mentioned and other features and utilities of the invention will be apparent from the following detailed description of preferred embodiments of the invention as illustrated in the accompanying drawings.

### BRIEF DESCRIPTION OF THE DRAWINGS

Figure 1 is a flow chart illustrating an embodiment of the present invention.

Figure 2 is a schematic illustration of a document to which the present invention is applied.

Figure 3 is a schematic illustration of a computer system to which the present invention may be applied.

Figure 4 is a schematic illustration of client server configuration to which the present invention may also be applied.

### DETAILED DESCRIPTION OF PREFERRED EMBODIMENT

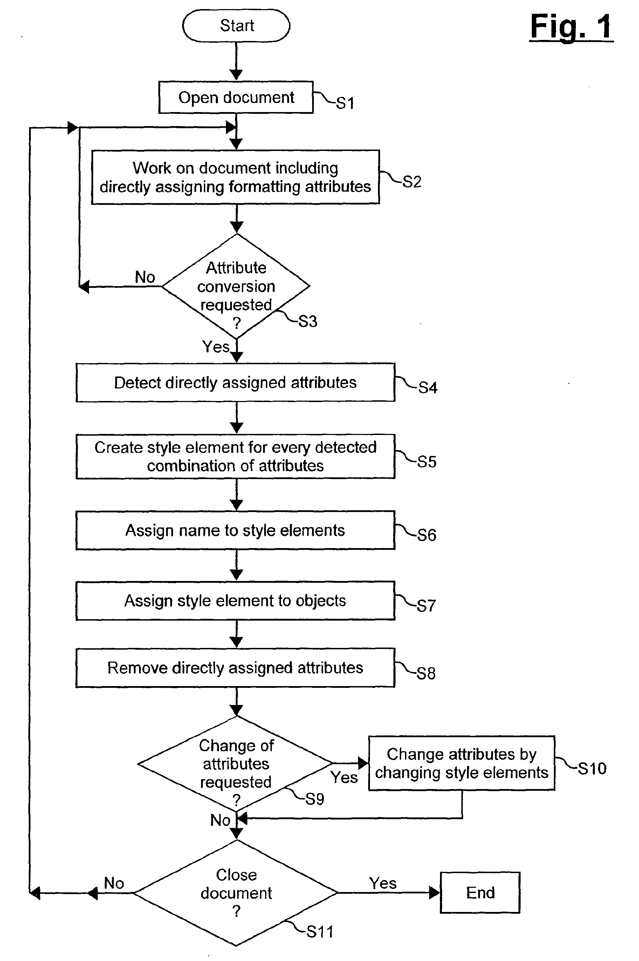

The flow chart of figure 1 schematically illustrates the method according to a preferred embodiment of the present invention. In method step S1 a computer readable document like e.g. a text document, a presentation document, an HTML page or a spreadsheet document, which is stored in a computer memory of a personal computer, a host computer or a remote internet server is opened. In step S2 the user may edit the document, start a new document etc. including directly assigning formatting attributes like character styles, underlinings, paragraph spacings, particulars of mathematical or chemical formulae or the like to objects of the documents.

In method step S3 a user request for attribute conversion is awaited. If such request is entered by the user then in the following method step S4 the program scans the document in order to detect the directly assigned attributes created in earlier method step S2. For every combination of directly assigned attributes present in the document a new style is created (step 5), which defines the format determined by this combination of directly assigned attributes. The directly assigned attributes contained in the document are removed from the document in later method step S8. According to the present invention, formatting information of the whole document is therefore contained in user defined and program defined styles.

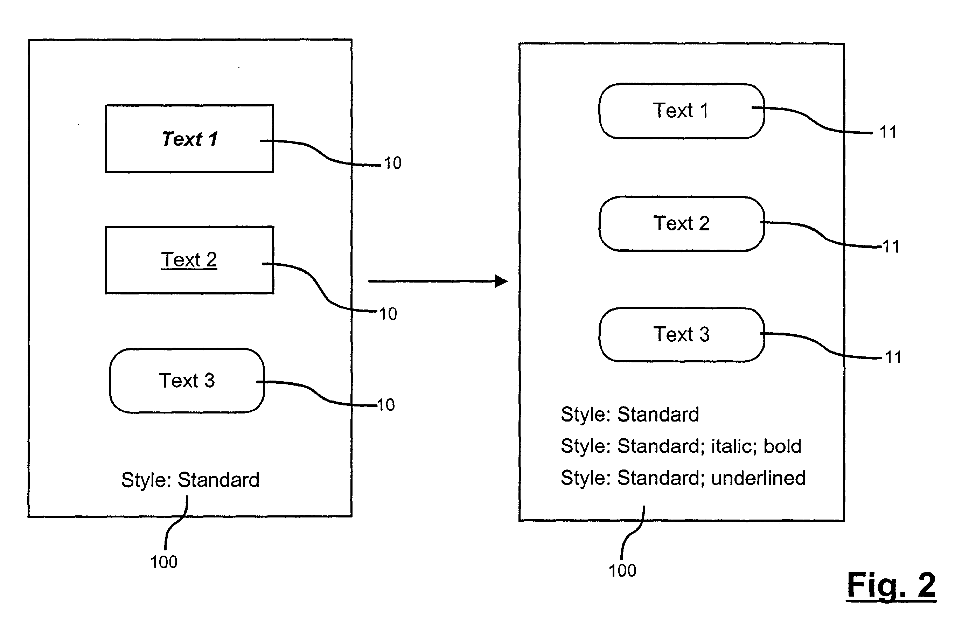

This is described in more detail with reference to figure 2. The document 100 contains direct formatted portions or objects 10 as well as one ore more portions 11, the style of which is defined by the style "standard". If, as is for example shown in figure 2, a hard formatted text portion 10 (***text 1***) has the attributes "italic, bold" and a text portion or object 11 (text 2) has the attribute "underlined", style elements for (italic, bold) and for (underlined) are created. If both text portions ***text 1*** and text 2 are based on a style called "standard", the newly created styles are denominated [standard; bold; italic] and [standard; underlined] (method step S6) so that the user can easily recognize the attributes defined by these newly created styles.

In the subsequent method step S7 these style elements are assigned to the corresponding objects, wherein objects having identical attributes are preferably assigned the same style element in order to reduce the total file size of a document. Then, in method step S8, the directly assigned attributes can be removed from the objects or text portions of the document 100.

If the user now wishes to change an attribute throughout a text, for example replace the attribute "red" by "underlined" since the output medium is not capable of printing colors, this attribute can in step S10 be easily changed by changing all style elements in which the attribute "red" appears. Preferably, the user has the possiblity to input an attribute like "red" or a group of attributes like e.g. "colors" or "greek characters" or "japanese characters" and a list of all style elements containing this attribute or this group of attributes is displayed on a display medium. The user can then easily change these attributes throughout the whole document.

Preferably the method steps S3 to S8 are carried out while the document is "open" and stored in a random access memory of the user device. It is, however, also possible to provide an automatic attribute conversion before closing the document. Since method steps S3 to S8 are executed while the document is opened by the user the invention can be applied to different types of computer readable documents independent of their internal organization or storage formats. The conversion of directly assigned attributes into styles (and a possible reconversion takes place with respect to the data stored in a working memory of a computer).

Preferably it is also possible to convert the style elements back into directly assigned or hard formatting attributes. For this purpose there may be provided a distinction between user defined styles and styles created by conversion of directly assigned attributes.

The present invention therefore allows the conversion of directly assigned attributes into style elements. This greatly facilitates changing particular attributes or groups of attributes. Moreover, the total document size can be reduced and content data and formatting data can be separated in the document.

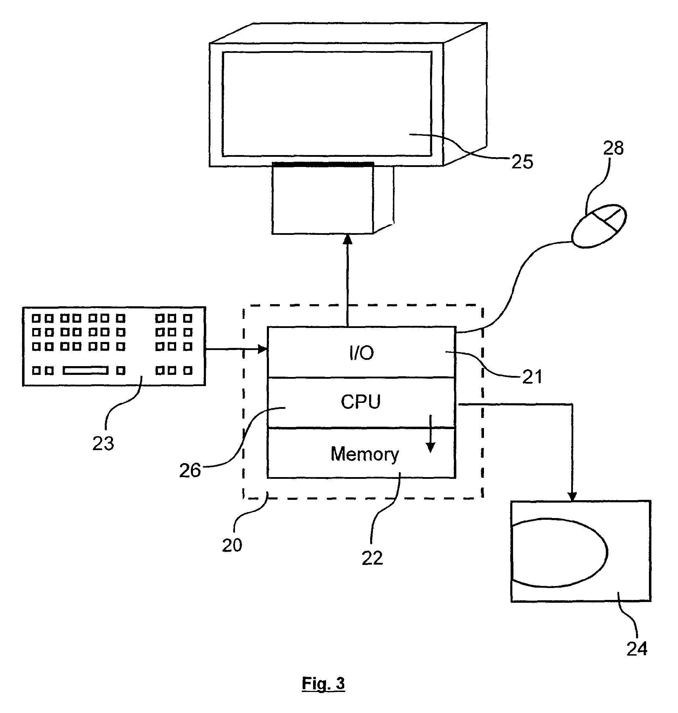

The present invention is applicable to a hardware configuration like a personal computer or a work station as illustrated schematically in figure 3. The computer may comprise a central processing unit CPU 26, an input output I/O unit 21, an internal memory 22 and an external memory 24. The computer may further comprise standard input devices like a keyboard 23, a mouse 28 or a speech processing means (not illustrated).

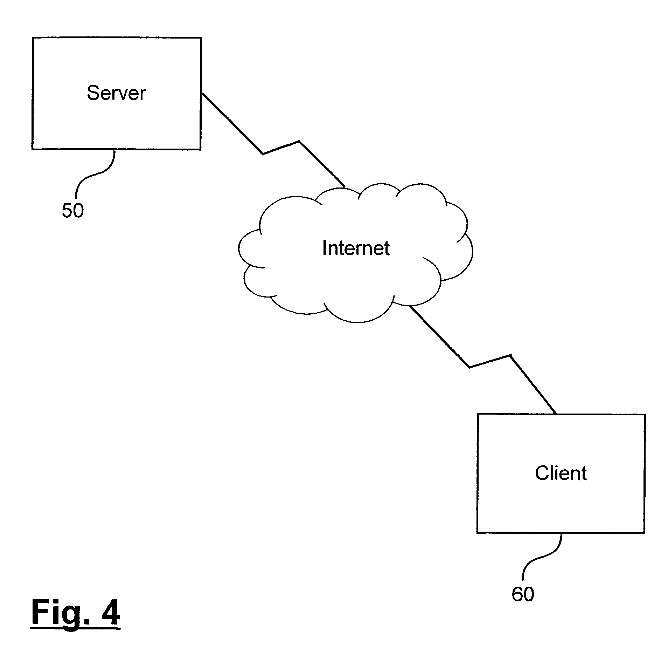

The invention, however, may also be applied to a client-server configuration as illustrated in figure 4. The document may be displayed on a display screen of a client device 60 while some or all steps of the method as illustrated before in connection with figures 1 and 2 are carried out on a server computer accessible by a client device over a data network as the internet using browser application or the like.

While the invention has been particularly shown with the reference to a preferred embodiment thereof, it will be understood by those skilled in the art that various other changes in the form and details may be made therein without departing from the spirit and scope of the invention.

## Claims

1. A method of formatting a computer readable document (100) comprising a plurality of objects (10) having directly assigned attributes, the method comprising the steps of:
(a) detecting the objects having directly assigned attributes,
(b) creating a style element for every detected combination of attributes in the document (100), and
(c) replacing the directly assigned attributes by a reference to the corresponding style element.

2. The method of claim 1, wherein the method steps (a), (b) and (c) are carried out while the document is stored in a random access memory of the processing unit of a computer system.

3. The method of claim 1 or 2, wherein the style elements are reconvertible into the corresponding directly assigned attributes.

4. The method of one of claims 1 to 3, wherein the method steps (a) to (c) are carried out upon request by a user.

5. The method of one of claims 1 to 4, wherein the computer readable document comprises a text document.

6. The method of one of claims 1 to 5, wherein a style element is assigned a name through which the attributes defined by the style element are recognizable by a user.

7. A computer system for formatting a computer readable document comprising a plurality of objects having directly assigned attributes, the computer system comprising a memory (22) for storing the document data and a processing unit (26) for carrying out the steps of:
(a) detecting the objects having directly assigned attributes,
(b) creating a style element for every detected combination of attributes in the document, and
(c) replacing the directly assigned attributes by a reference to the corresponding style element.

8. The computer system of claim 7, wherein the method steps (a) to (c) are executable while the document is stored in a random access memory of the memory device.

9. The computer system of claim 7 or 8, wherein the style elements are reconvertible into the corresponding directly assigned attributes.

10. The computer system of one of claims 6 to 9, wherein the method steps (a) to (c) are executable upon request by a user.

11. The computer system of one of claims 7 to 10, wherein the computer readable document comprises a text document.

12. Computer program for formatting a computer readable document (100) comprising a plurality of objects (10) having directly assigned attributes, the computer program comprising program code for carrying out the steps of:
(a) detecting the objects having directly assigned attributes,
(b) creating a style element for every detected combination of attributes in the document, and
(c) replacing the directly assigned attributes by a reference to the corresponding style element.

13. Computer program product for formatting a computer readable document comprising a plurality of objects having directly assigned attributes, the computer program comprising program code for carrying out the steps of:
(a) detecting the objects having directly assigned attributes,
(b) creating a style element for every detected combination of attributes in the document, and
(c) replacing the directly assigned attributes by a reference to the corresponding style element.
